# FASCICULE DE BREVET EUROPEEN

(11) **EP 1 216 371 B1**
(45) Date de publication et mention de la délivrance du brevet: **25.02.2004**
(21) Numéro de dépôt: 00964345.3
(22) Date de dépôt: 22.09.2000
(51) Int. Cl.: F16H 61/30, F16H 63/30

(54) **DISPOSITIF DE PASSAGE DE VITESSES POUR BOITE DE VITESSES ROBOTISEE**
SCHALTVORRICHTUNG FÜR EIN AUTOMATISIERTES GETRIEBE
GEARSHIFT DEVICE FOR ROBOTIC GEARBOX

(30) Priorité: 28.09.1999 FR 9912059
(43) Date de publication de la demande: 26.06.2002
(73) Titulaire: Renault s.a.s., 92100 Boulogne Billancourt (FR)
(72) Inventeur: TEIXEIRA, Jean, Paul, F-75015 Paris (FR)
(86) Numéro de dépôt international: PCT/FR2000/002624
(87) Numéro de publication internationale: WO 2001/023785

(56) Documents cités:
- EP-A- 0 803 651
- DE-C- 4 204 883
- FR-A- 2 510 492
- US-A- 2 508 564
- SOVIET INVENTIONS ILLUSTRATED Week 8814, 7 avril 1988 (1988-04-07) Derwent Publications Ltd., London, GB; AN 73477 XP002141520 & SU 1 333 878 A (BELORUSSIAN POLY), 30 août 1987 (1987-08-30)

## Description

La présente invention est relative à un ensemble de fourchette de passage de vitesses pour boîte de vitesses robotisée, et à un dispositif de passage de vitesses intégrant cet ensemble.

On connaît du document US 2 508 564 un système de fourchette de passage de vitesses pour boîte de vitesses comprenant une fourchette de passage de vitesses montée coulissante entre des première et deuxième positions correspondant respectivement au passage de première et deuxième vitesses.

Ce système, s'il offre satisfaction au plan mécanique, présente l'inconvénient de nécessiter un vérin du type à double effet pour faire coulisser la fourchette afin de passer la vitesse souhaitée.

Un tel vérin, comprenant un piston susceptible de se déplacer dans l'une ou l'autre de deux directions opposées selon celles de ses faces qui est soumise à la pression d'un fluide, est à la fois coûteux et encombrant.

La présente invention a pour but de réduire cet inconvénient.

On atteint ce but de l'invention avec un ensemble de fourchette de passage de vitesses pour boîte de vitesses robotisée, comprenant une fourchette de passage de vitesses montée coulissante entre des première et deuxième positions correspondant respectivement au passage de première et deuxième vitesses, remarquable en ce qu'il comprend des premier et deuxième vérins à simple effet montés en opposition pour déplacer ladite fourchette respectivement vers lesdites première et deuxième positions.

Le fait de remplacer le vérin à double effet de la technique antérieure par deux vérins à simple effet montés en opposition permet de réduire le coût de fabrication et l'encombrement de l'ensemble de fourchette.

Suivant d'autres caractéristiques de cet ensemble de fourchette, lesdits vérins sont sensiblement identiques, et chacun d'entre eux comprend:
- un corps susceptible de recevoir un fluide sous pression tel que de l'huile,
- un capuchon monté coulissant et étanche sur la périphérie dudit corps, coopérant avec ladite fourchette,
- un coulisseau creux comportant une tête et une tige munie d'évidements à son extrémité, ce coulisseau étant monté coulissant à l'intérieur dudit corps entre une position escamotée où il se trouve à l'intérieur de ce corps et une position déployée où ladite tête est en butée par rapport audit corps et où ladite tige pointe vers l'extérieur dudit corps et vers l'intérieur dudit capuchon,
de manière que lorsque ledit fluide se trouve simultanément à la même pression dans lesdits vérins, il puisse exercer une poussée sur lesdits coulisseaux et sur lesdits capuchons afin d'amener ces organes jusqu'à une position d'équilibre stable dans laquelle chaque coulisseau se trouve dans ladite position de butée par rapport audit corps, et chaque capuchon se trouve en butée contre l'extrémité de la tige du coulisseau correspondant, permettant ainsi de placer ladite fourchette dans une position de point mort située entre lesdites première et deuxième positions.

La présente invention a également pour but de fournir un système de passage de vitesses qui permette de s'affranchir des inconvénients susmentionnés.

On atteint ce but de l'invention avec un dispositif de passage de vitesses pour boîte de vitesses robotisée, remarquable en ce qu'il comprend au moins un ensemble de fourchette conforme à ce qui précède, ainsi qu'un circuit de commande hydraulique adapté pour actionner sélectivement l'un ou l'autre des vérins de cet ensemble, ou ces deux vérins à la fois.

Suivant d'autres caractéristiques, ce dispositif de passage de vitesses comprend:
- au moins deux ensembles conformes à ce qui précède, et ledit circuit hydraulique comprend des moyens pour actionner les vérins de l'un desdits ensembles indépendamment des vérins de l'autre ensemble,
- quatre ensembles conformes à ce qui précède, et lesdits moyens d'actionnement indépendants comprennent une électrovanne à trois positions et trois voies reliée à huit électrovannes à deux positions et trois voies commandant lesdits vérins,
- au moins deux ensembles conformes à ce qui précède, et ledit circuit hydraulique comprend des moyens pour interdire l'actionnement simultané de vérins faisant partie d'ensembles différents,
- quatre ensembles conformes à ce qui précède, et lesdits moyens d'actionnement comprennent une électrovanne à trois positions et trois voies reliée à deux électrovannes à deux positions et trois voies, elles-mêmes reliées à une électrovanne à deux positions et huit voies, elle-même reliée à une électrovanne à deux positions et seize voies commandant lesdits vérins,
- quatre ensembles conformes à ce qui précède, et lesdits moyens d'actionnement comprennent deux électrovannes à trois positions et trois voies reliées à une électrovanne à deux positions et huit voies, elle-même reliée à une électrovanne à deux positions et seize voies commandant lesdits vérins.

Grâce à ces caractéristiques, on obtient un dispositif de passage de vitesses dans lequel chaque fourchette de passage de vitesses dispose de ses propres moyens d'actionnement, ce qui permet de gagner en rapidité lorsqu'on souhaite effectuer un passage de vitesse nécessitant un changement de la fourchette à actionner.

D'autres caractéristiques et avantages de la présente invention apparaîtront à la lecture de la description qui va suivre et à l'examen du dessin annexé, dans lequel:
- la figure 1 est une vue en perspective partiellement arrachée de quatre ensembles de fourchette de passage de vitesses selon l'invention,
- les figures 2 à 4 sont des vues en coupe d'une paire de vérins associés à un ensemble de fourchette de passage de vitesses selon l'invention, dans trois positions différentes,
- les figures 5 à 7 sont des schémas représentant trois modes de réalisation différents du dispositif selon l'invention, et
- les figures 8 à 10 représentent des tables de vérité décrivant respectivement le fonctionnement des dispositifs des figures 5 à 7.

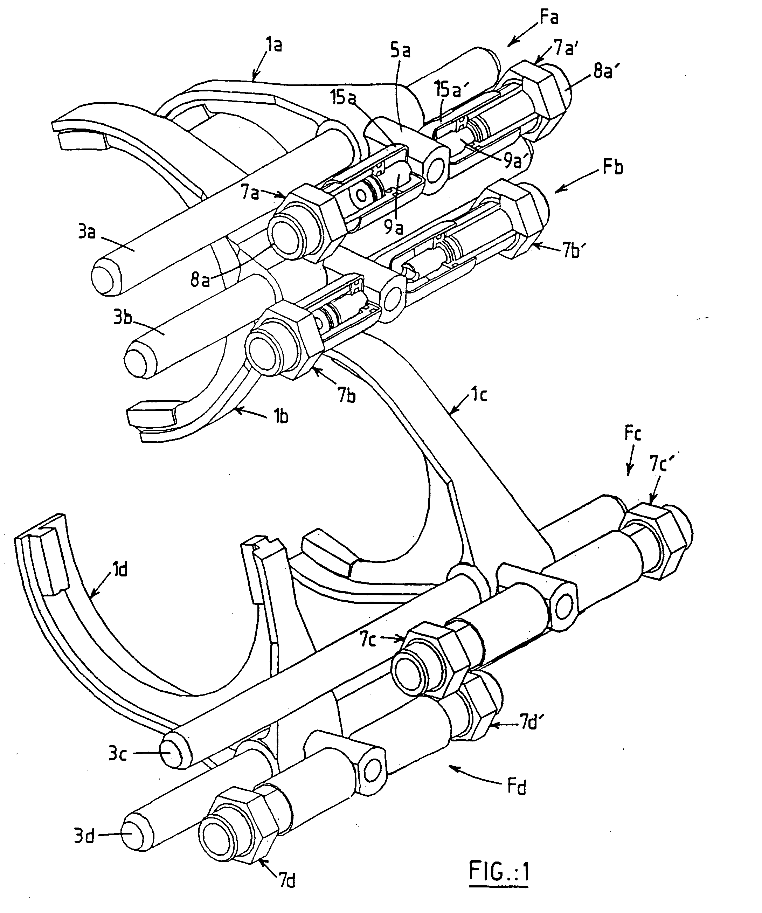

On se reporte à présent à la figure 1, sur laquelle on a représenté quatre ensembles de fourchette selon l'invention Fa, Fb, Fc, Fd dans la position qu'ils occupent normalement dans une boîte à six vitesses et une marche arrière dont les autres organes (baladeurs, anneaux de synchronisation, pignons fous de vitesses) n'ont pas été représentés.

On va décrire plus particulièrement l'ensemble de fourchette Fa, étant entendu que les autres ensembles de fourchette sont tout à fait analogues.

Sur les figures, les organes analogues de ces quatre ensembles de fourchette sont désignés par des références identiques indicées respectivement avec les lettres a, b, c, et d.

L'ensemble de fourchette Fa comprend une fourchette de passage de vitesse 1a à proprement parler, montée coulissante sur une barre 3a entre des première et deuxième positions correspondant respectivement aux passages de première et deuxième vitesses.

Comme cela est connu de l'homme du métier, le passage de ces vitesses s'effectue par crabotage d'un baladeur sur des pignons fous de vitesses (non représentés) sous l'action de la fourchette 1a.

Cette fourchette comprend un doigt 5a s'étendant selon une direction sensiblement perpendiculaire à la barre 3a.

Deux vérins à simple effet 7a, 7a' sont montés en opposition de part et d'autre du doigt 5a.

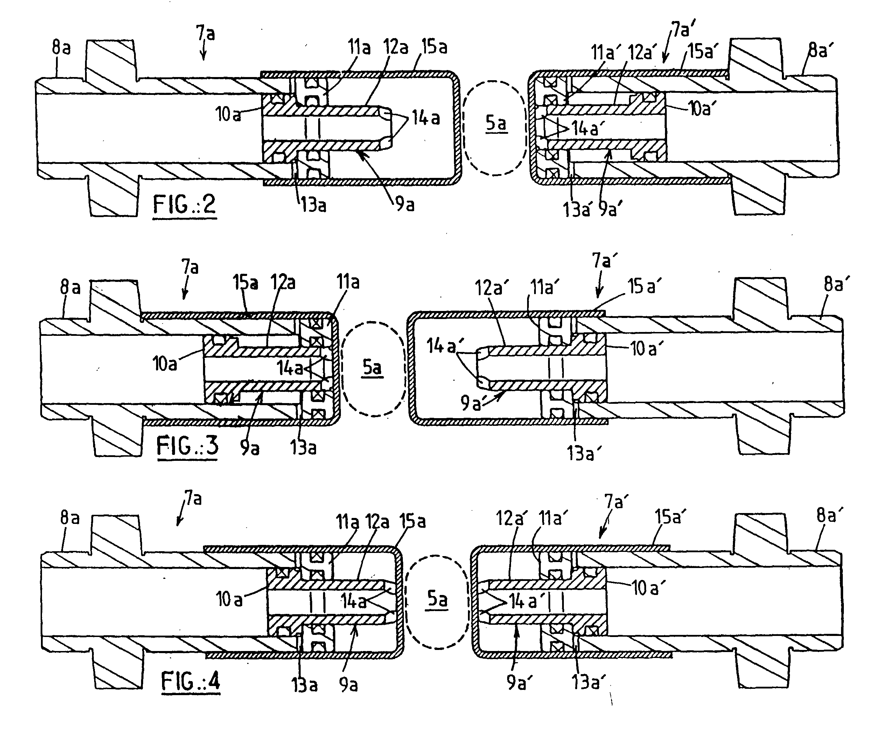

On se reporte à présent à la figure 2, sur laquelle on a représenté plus en détail les deux vérins 7a, 7a'.

Comme on peut le voir sur cette figure, ces deux vérins sont sensiblement identiques, chacun d'entre eux comprenant un corps 8a, 8a' dans lequel un coulisseau 9a, 9a' peut coulisser de manière étanche.

Chacun de ces coulisseaux comprend une tête 10a, 10a' susceptible de venir en contact contre un organe de butée 11a, 11a', et une tige creuse 12a, 12a'.

A proximité de l'organe de butée 11a, 11a', le corps 8a, 8a' comprend une pluralité de canaux de mise à fuite radiaux 13a, 13a'.

Chacune des tiges 12a, 12a' comporte, à son extrémité située à l'extérieur du corps 8a, 8a', des évidements 14a, 14a'.

Chaque vérin comprend en outre un organe formant capuchon 15a, 15a', susceptible de coulisser de manière étanche sur la périphérie du corps 8a, 8a', interposé entre le coulisseau 9a, 9a' et le doigt 5a.

Un circuit hydraulique (voir ci-après) est connecté à chacun des corps de vérin 8a, 8a' de manière à amener dans ceux-ci un fluide sous pression tel que de l'huile.

Sur la figure 2, seul le vérin 7a est mis sous pression.

Sur la figure 3, seul le vérin 7a' est mis sous pression.

Sur la figure 4, les deux vérins 7a et 7a' sont mis sous pression.

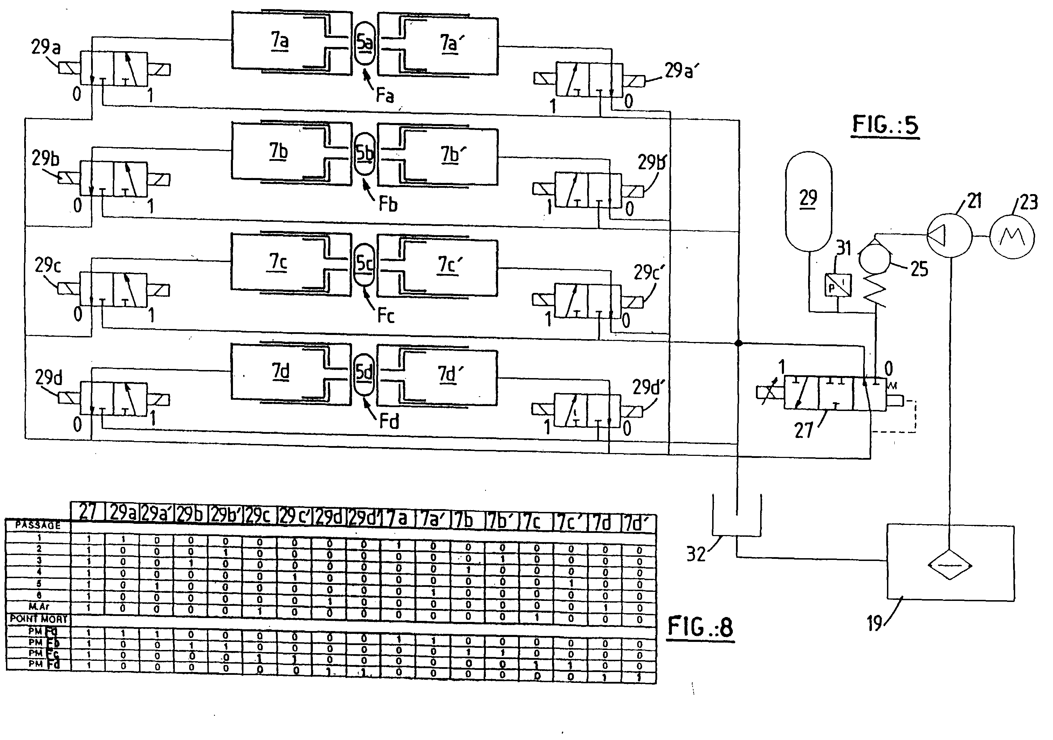

On se reporte à présent à la figure 5, sur laquelle on a représenté un premier mode de réalisation du dispositif selon l'invention.

Ce dispositif comprend les quatre ensembles de fourchette Fa, Fb, Fc, Fd décrits ci-avant, ainsi qu'un circuit de commande hydraulique connecté aux vérins 7a, 7a', 7b, 7b', 7c, 7c', 7d, 7d'.

Ce circuit de commande hydraulique comprend un réservoir 19 de fluide tel que de l'huile, relié à une pompe hydraulique 21 susceptible d'être actionnée par un moteur 23, la pompe débitant l'huile dans une ligne commandée par une électrovanne 27 à trois positions et trois voies, à travers un clapet anti-retour 25.

Un accumulateur de pression 29 et un capteur de pression 31 sont branchés sur ce circuit hydraulique entre le clapet anti-retour 25 et l'électrovanne 27.

Cette dernière est reliée à huit électrovannes à deux positions et trois voies 29a, 29a', 29b, 29b', 29c, 29c', 29d, 29d', commandant respectivement les huit vérins 7a, 7a', 7b, 7b', 7c, 7c', 7d, 7d'.

Les électrovannes 27, 29a, 29a', 29b, 29b', 29c, 29c', 29d, 29d' sont par ailleurs reliées à un collecteur 32 de retour d'huile dans le réservoir 19.

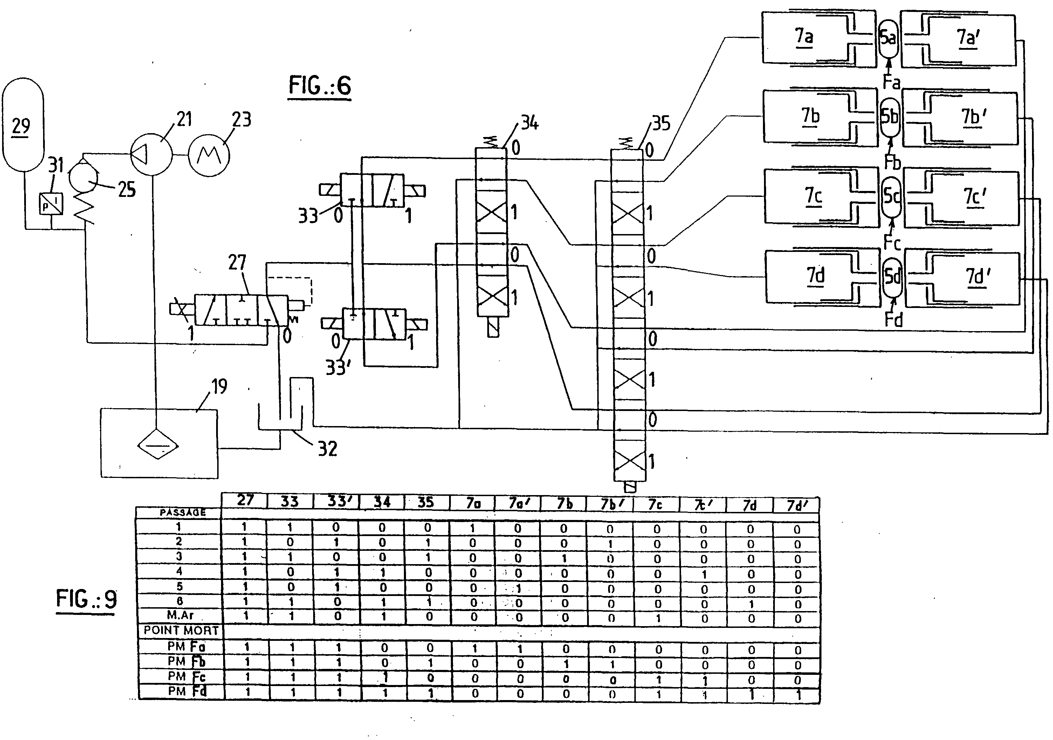

On se reporte à présent à la figure 6, sur laquelle on a représenté un autre mode de réalisation du dispositif selon l'invention.

Ce mode de réalisation diffère du précédent en ce que l'électrovanne 27 à trois positions et trois voies est reliée à des première 33 et deuxième 33' électrovannes à deux positions et trois voies, elles-mêmes reliées à une électrovanne 34 à deux positions et huit voies, elle-même reliée à une électrovanne 35 à deux positions et seize voies, commandant les huit vérins 7a, 7a', 7b, 7b', 7c, 7c', 7d, 7d'.

Les électrovannes 27, 33, 33', 34 et 35 sont par ailleurs reliées au collecteur 32 de retour d'huile dans le réservoir 19.

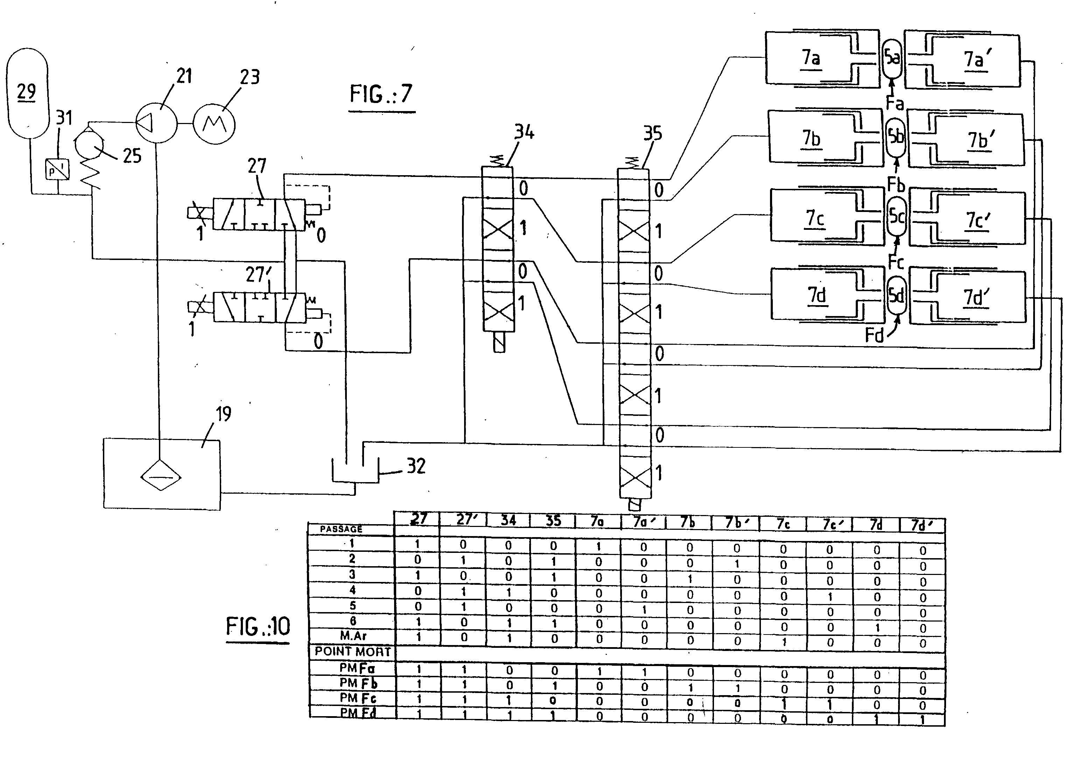

On se reporte à présent à la figure 7, sur laquelle on a représenté encore un autre mode de réalisation du dispositif selon l'invention.

Ce mode de réalisation diffère du précédent en ce qu'il comprend deux électrovannes 27, 27' à trois positions et trois voies reliées à l'électrovanne 34 à deux positions et huit voies.

Le fonctionnement et les avantages de l'ensemble de fourchette et du dispositif selon l'invention découlent directement de la description qui précède.

Quand on injecte un fluide sous pression tel que de l'huile dans le corps 8a du vérin 7a (voir figure 2) en permettant au fluide situé dans le corps 8a' du vérin 7a' de s'échapper, le coulisseau 9a vient buter contre l'organe 11a, l'air situé entre la tête 10a de ce coulisseau et l'organe 11a s'échappant par les canaux de mise à fuite 13a.

Le fluide hydraulique pénètre également dans la tige creuse 12a, et remplit l'espace situé entre cette tige et le capuchon 15a.

Le déplacement du coulisseau 9a ainsi que la présence d'huile sous pression à l'intérieur du capuchon 15a ont pour effet de pousser celui-ci vers la droite de la figure 2.

Ce capuchon, en agissant sur le doigt 5a, fait ainsi coulisser la fourchette la (voir figure 1) sur la barre 3a vers la droite de la figure, ce qui permet d'engager la vitesse correspondante.

Inversement, quand on injecte un fluide sous pression tel que de l'huile dans le corps 8a' du vérin 7a' (voir figure 3) en permettant au fluide situé dans le corps 8a du vérin 7a de s'échapper, on déplace la fourchette la vers la gauche de la figure, ce qui permet d'engager l'autre vitesse correspondante.

Si, par exemple, à partir de la situation de la figure 3, on injecte également du fluide sous pression dans le corps 8a du vérin 7a, ce fluide va pousser le coulisseau 10a et le capuchon 11a jusqu'au point où les forces exercées par les capuchons 15a et 15a' sur le doigt 5a sont égales, c'est-à-dire jusqu'au moment où le coulisseau 9a vient buter contre l'organe 11a et où le capuchon 15a' vient buter sur l'extrémité de la tige 12a' (voir figure 4).

On atteint de la sorte une position d'équilibre stable, correspondant à une situation de point mort de la fourchette 1a.

Comme on peut le comprendre à présent, les vérins à simple effet destinés à actionner les fourchettes Fa, Fb, Fc, Fd remplacent avantageusement les vérins à double effet de sélection et de passage de la technique antérieure.

Ces vérins à simple effet permettent d'actionner directement les fourchettes Fa, Fb, Fc, Fd, sans passer par une phase de sélection. On peut de la sorte obtenir des passages de vitesses très rapides.

En outre, les positions de point mort de ces fourchettes sont obtenues de manière très simple.

On remarquera également que ces vérins permettent d'obtenir, à faible coût, une boîte de vitesses robotisée dont l'encombrement est beaucoup plus faible qu'une boîte comprenant des vérins de sélection et de passage, lesquels doivent nécessairement être orientés selon des directions différentes.

Dans les dispositifs des figures 5 à 7, le réservoir 19, la pompe hydraulique 21, le moteur 23, le clapet 25, l'accumulateur de pression 29 et le capteur de pression 31 permettent d'alimenter sélectivement les vérins 7a, 7a', 7b, 7b', 7c, 7c', 7d, 7d' sous une pression de fluide déterminée.

Le collecteur 32 permet au fluide situé dans des vérins sélectionnés de s'échapper de ceux-ci et de revenir dans le réservoir 19.

La table de vérité de la figure 8 décrit le fonctionnement du dispositif de la figure 5.

On a consigné dans la ligne du haut de cette table d'une part les repères des électrovannes 27, 29a, 29a', 29b, 29b', 29c, 29c', 29d, 29d', et d'autre part ceux des huit vérins 7a, 7a', 7b, 7b', 7c, 7c', 7d, 7d'.

On a consigné dans la colonne de gauche de cette table d'une part les six vitesses et la marche arrière M.Ar et d'autre part les quatre points morts PMFa, PMFb, PMFc, PMFd pouvant être obtenus avec les quatre fourchettes Fa, Fb, Fc, Fd.

Dans les colonnes situées sous les repères des électrovannes susmentionnées, les valeurs « 1 » et « 0 » indiquent que les électrovannes concernées se trouvent dans l'une ou l'autre des positions répertoriées de la même manière sur la figure 5.

Dans les colonnes situées sous les repères des vérins susmentionnés, les valeurs « 1 » et « 0 » indiquent respectivement qu'on injecte dans le vérin concerné du fluide sous pression, ou qu'on permet au fluide situé dans ce vérin de s'échapper.

Comme cela apparaît à l'examen de la table de la figure 8, le mode de réalisation de la figure 5 permet d'actionner de manière indépendante chacun des huit vérins 7a, 7a', 7b, 7b', 7c, 7c', 7d, 7d'.

Un tel dispositif présente certains inconvénients.

Rien n'empêche, par exemple, d'injecter du liquide sous pression simultanément dans les vérins 7a et 7b: il suffit pour cela de placer simultanément les électrovannes 29a et 29b en position « 1 ».

On voit que ceci reviendrait à vouloir engager les première et troisième vitesses à la fois, ce qui n'est bien sûr pas possible et risque d'endommager gravement la boîte de vitesses.

Pour ces raisons, il est utile de prévoir des moyens pour interdire l'actionnement simultané de vérins faisant partie d'ensembles de fourchette différents.

Les dispositifs des figures 6 et 7 comprennent de tels moyens.

Dans les tables de vérité des figures 9 et 10 correspondant respectivement aux dispositifs des figures 6 et 7, on peut par exemple vérifier aisément que l'on ne risque pas d'engager simultanément les première et troisième vitesses.

En effet, ces tables indiquent qu'il faudrait pour cela que l'électrovanne 35 à deux positions et seize voies se trouve à la fois en position « 1 » et « 0 », ce qui n'est pas possible.

Comme on peut le comprendre à présent, le dispositif selon l'invention permet de commander de manière relativement simple les ensembles de fourchette selon l'invention, avec le maximum de sécurité vis-à-vis des risques d'engagements simultanés de vitesses.

Les ensembles de fourchette selon l'invention pourraient être utilisés dans une boîte de vitesses robotisée comprenant plus ou moins de six vitesses.

## Revendications

1. Ensemble de fourchette de passage de vitesses (Fa, Fb, Fc, Fd) pour boîte de vitesses robotisée, comprenant une fourchette de passage de vitesses (1a, 1b, 1e, 1d) montée coulissante entre des première et deuxième positions correspondant respectivement au passage de première et deuxième vitesses, **caractérisé en ce qu'**il comprend des premier (7a, 7b, 7c, 7d) et deuxième (7a', 7b', 7c', 7d') vérins à simple effet montés en opposition pour déplacer ladite fourchette respectivement vers lesdites première et deuxième positions.

2. Ensemble selon la revendication 1, **caractérisé en ce que** lesdits vérins (7a, 7a', 7b, 7b', 7c, 7c', 7d, 7d') sont sensiblement identiques, et **en ce que** chacun d'entre eux comprend:
- un corps (8a, 8a') susceptible de recevoir un fluide sous pression tel que de l'huile,
- un capuchon (15a, 15a') monté coulissant et étanche sur la périphérie dudit corps (8a, 8a'), coopérant avec ladite fourchette (Fa, Fb, Fc, Fd),
- un coulisseau (9a, 9a') creux comportant une tête (10a, 10a') et une tige (12a, 12a') munie d'évidements à son extrémité, ce coulisseau étant monté coulissant à l'intérieur dudit corps (8a, 8a') entre une position escamotée où il se trouve à l'intérieur de ce corps et une position déployée où ladite tête (10a, 10a') est en butée par rapport audit corps (8a, 8a') et où ladite tige (12a, 12a') pointe vers l'extérieur dudit corps et vers l'intérieur dudit capuchon (15a, 15a'),
de manière que lorsque ledit fluide se trouve simultanément à la même pression dans lesdits vérins (7a, 7a', 7b, 7b', 7c, 7c', 7d, 7d') il puisse exercer une poussée sur lesdits coulisseaux (9a, 9a') et sur lesdits capuchons (15a, 15a') afin d'amener ces organes jusqu'à une position d'équilibre stable dans laquelle chaque coulisseau se trouve dans ladite position de butée par rapport audit corps (8a, 8a'), et chaque capuchon se trouve en butée contre l'extrémité de la tige (12a, 12a') du coulisseau correspondant, permettant ainsi de placer ladite fourchette (Fa, Fb, Fc, Fd) dans une position de point mort située entre lesdites première et deuxième positions.

3. Dispositif de passage de vitesses pour boîte de vitesses robotisée, **caractérisé en ce qu'**il comprend au moins un ensemble (Fa, Fb, Fc, Fd) conforme à l'une des revendications 1 ou 2, ainsi qu'un circuit de commande hydraulique adapté pour actionner sélectivement l'un (7a, 7b, 7c, 7d) ou l'autre (7a', 7b', 7c', 7d') desdits vérins, ou ces deux vérins à la fois.

4. Dispositif selon la revendication 3, **caractérisé en ce qu'**il comprend au moins deux ensembles (Fa, Fb, Fc, Fd) conformes à l'une des revendications 1 ou 2, et **en ce que** ledit circuit hydraulique comprend des moyens pour actionner les vérins de l'un desdits ensembles indépendamment des vérins de l'autre ensemble.

5. Dispositif selon la revendication 4, **caractérisé en ce qu'**il comprend quatre ensembles (Fa, Fb, Fc, Fd) conformes à l'une des revendications 1 ou 2, et **en ce que** lesdits moyens d'actionnement indépendants comprennent une électrovanne à trois positions et trois voies (27) reliée à huit électrovannes à deux positions et trois voies (29a, 29a', 29b, 29b', 29c, 29c', 29d, 29d'), commandant lesdits vérins (7a, 7a', 7b, 7b', 7c, 7c', 7d, 7d').

6. Dispositif selon la revendication 3, **caractérisé en ce qu'**il comprend au moins deux ensembles (Fa, Fb, Fc, Fd) conformes à l'une des revendications 1 ou 2, et **en ce que** ledit circuit hydraulique comprend des moyens pour interdire l'actionnement simultané de vérins faisant partie d'ensembles différents.

7. Dispositif selon la revendication 6, **caractérisé en ce qu'**il comprend quatre ensembles (Fa, Fb, Fc, Fd) conformes à l'une des revendications 1 ou 2, et **en ce que** lesdits moyens d'actionnement comprennent une électrovanne à trois positions et trois voies (27) reliée à deux électrovannes à deux positions et trois voies (33, 33'), elles-mêmes reliées à une électrovanne à deux positions et huit voies (34), elle-même reliée à une électrovanne à deux positions et seize voies (35) commandant lesdits vérins (7a, 7a', 7b, 7b', 7c, 7c', 7d, 7d').

8. Dispositif selon la revendication 6, **caractérisé en ce qu'**il comprend quatre ensembles (Fa, Fb, Fc, Fd) conformes à l'une des revendications 1 ou 2, et **en ce que** lesdits moyens d'actionnement comprennent deux électrovannes à trois positions et trois voies (27, 27') reliées à une électrovanne à deux positions et huit voies (34), elle-même reliée à une électrovanne à deux positions et seize voies (35) commandant lesdits vérins (7a, 7a', 7b, 7b', 7c, 7c', 7d, 7d').

## Patentansprüche

1. Gesamtheit einer Gangschaltgabel (Fa, Fb, Fc, Fd) für ein automatisches Getriebe, aufweisend eine Schaltgabel (1a, 1b, 1c, 1d), welche verschiebbar zwischen einer ersten und zweiten Stellung, jeweils entsprechend dem Schalten eines ersten und zweiten Gangs, montiert ist,
**dadurch gekennzeichnet, dass**
sie erste (7a, 7b, 7c, 7d) und zweite (7a', 7b', 7c', 7d') einfach wirkende Zylinder aufweist, welche gegenüberliegend montiert sind, um die Gabel jeweils in Richtung zu der ersten und zweiten Stellung zu verstellen.

2. Gesamtheit nach Anspruch 1, **dadurch gekennzeichnet, dass** die Zylinder (7a, 7a', 7b, 7b', 7c, 7c', 7d, 7d') im Wesentlichen identisch sind und dass jeder von ihnen aufweist:
- einen Körper (8a, 8a'), der fähig ist, ein Druckfluid, wie z.B. Öl, aufzunehmen,
- eine Verschlusskappe (15a, 15a'), welche verschiebbar und dicht auf dem Umfang des Körpers (8a, 8a') montiert ist, wobei sie mit der Gabel (Fa, Fb, Fc, Fd) zusammenwirkt,
- ein hohles Gleitstück (9a, 9a'), welches einen Kopf (10a, 10a') und eine Stange (12a, 12a') aufweist, die an ihrem Ende mit Vertiefungen versehen ist, wobei dieses Gleitstück verschiebbar im Innem des Körpers (8a, 8a') zwischen einer eingezogenen Stellung, wo es sich im Inneren dieses Körpers befindet, und einer ausgefahrenen Stellung, wo der Kopf (10a, 10a') in Anschlag im Verhältnis zum Körper (8a, 8a') ist und wo die Stange (12a, 12a') in Richtung zu der Außenseite des Körpers und in Richtung zum Inneren der Verschlusskappe (15a, 15a') gerichtet ist,
in einer Weise, dass, wenn das Fluid sich gleichzeitig bei dem gleichen Druck in den Zylindern (7a, 7a', 7b, 7b', 7c, 7c', 7d, 7d') befindet, es einen Schub auf die Gleitstücke (9a, 9a') ausüben kann und auf die Verschlusskappen (15a, 15a'), um diese Bauteile bis in eine stabile Gleichgewichtsstellung zu bringen, in welcher sich jedes Gleitstück in der Anschlagstellung im Verhältnis zum Körper (8a, 8a') befindet und sich jede Verschlusskappe in Anschlag gegen das Ende der Stange (12a, 12a') des entsprechenden Gleitstücks befindet, wobei so ermöglicht wird, die Gabel (Fa, Fb, Fc, Fd) in einer Totpunkt-Stellung zu platzieren, welche zwischen der ersten und der zweiten Stellung angeordnet ist.

3. Schaltvorrichtung für ein automatisches Getriebe, **dadurch gekennzeichnet, dass** sie mindestens eine Gesamtheit (Fa, Fb, Fc, Fd) entsprechend zu einem der Ansprüche 1 oder 2 aufweist sowie einen hydraulischen Steuerkreis, welcher angepasst ist, um selektiv den einen (7a, 7b, 7c, 7d) oder den anderen (7a', 7b', 7c', 7d') der Zylinder zu betätigen oder diese zwei Zylinder gleichzeitig.

4. Vorrichtung nach Anspruch 3, **dadurch gekennzeichnet, dass** sie mindestens zwei Gesamtheiten (Fa, Fb, Fc, Fd) entsprechend zu einem der Ansprüche 1 oder 2 aufweist und dass der Hydraulikkreis Mittel zum Betätigen der Zylinder einer der Gesamtheiten unabhängig von den Zylindern der anderen Gesamtheit aufweist.

5. Vorrichtung nach Anspruch 4, **dadurch gekennzeichnet, dass** sie vier Gesamtheiten (Fa, Fb, Fc, Fd) entsprechend zu einem der Ansprüche 1 oder 2 aufweist und dass die unabhängigen Betätigungsmittel ein Elektroventil mit drei Stellungen und drei Wegen (27) aufweisen, das mit acht Elektroventilen mit zwei Stellungen und drei Wegen (29a, 29a', 29b, 29b', 29c, 29c', 29d, 29d') verbunden ist, welche die Zylinder (7a, 7a', 7b, 7b', 7c, 7c', 7d, 7d') steuern.

6. Vorrichtung nach Anspruch 3, **dadurch gekennzeichnet, dass** sie mindestens zwei Gesamtheiten (Fa, Fb, Fc, Fd) entsprechend zu einem der Ansprüche 1 oder 2 aufweist und dass der Hydraulikkreis Mittel zum Unterbinden der gleichzeitigen Betätigung der Zylinder, welche Teil verschiedener Gesamtheiten sind, aufweist.

7. Vorrichtung nach Anspruch 6, **dadurch gekennzeichnet, dass** sie vier Gesamtheiten (Fa, Fb, Fc, Fd) entsprechend zu einem der Ansprüche 1 oder 2 aufweist und dass die Betätigungsmittel ein Elektroventil mit drei Stellungen und drei Wegen (27) aufweisen, das mit zwei Elektroventilen mit zwei Stellungen und drei Wegen (33, 33') verbunden ist, die selbst mit einem Elektroventil mit zwei Stellungen und achten Wegen (34) verbunden sind, das selbst mit einem Elektroventil mit zwei Stellungen und sechszehn Wegen (35) verbunden ist, das die Zylinder (7a, 7a', 7b, 7b', 7c, 7c', 7d, 7d') steuert.

8. Vorrichtung nach Anspruch 6, **dadurch gekennzeichnet, dass** sie vier Gesamtheiten (Fa, Fb, Fc, Fd) entsprechend zu einem der Ansprüche 1 oder 2 aufweist und dass die Betätigungsmittel zwei Elektroventile mit drei Stellungen und drei Wegen (27, 27') aufweisen, die mit einem Elektroventil mit zwei Stellungen und acht Wegen (34) verbunden sind, das selbst mit einem Elektroventil mit zwei Stellungen und sechzehn Wegen (35) verbunden ist, welches die Zylinder (7a, 7a', 7b, 7b', 7c, 7c', 7d, 7d') steuert.

## Claims

1. A gear change fork assembly (Fa, Fb, Fc, Fd) for a robotic gearbox comprising a gear change fork (1a, 1b, 1c, 1d) mounted slidably between first and second positions respectively corresponding to the change of first and second gears, **characterised in that** it comprises first (7a, 7b, 7c, 7d) and second (7a', 7b', 7c', 7d') single-acting actuators mounted in opposite relationship to displace said fork respectively towards said first and second positions.

2. An assembly according to claim 1 **characterised in that** said actuators (7a, 7a', 7b, 7b', 7c, 7c', 7d, 7d') are substantially identical and each thereof comprises:
- a body (8a, 8a') capable of receiving a fluid under pressure such as oil,
- a cover (15a, 15a') mounted slidably and sealingly on the periphery of said body (8a, 8a') and co-operating with said fork (Fa, Fb, Fc, Fd),
- a hollow slider (9a, 9a') comprising a head (10a, 10a') and a stem (12a, 12a') provided with openings at its end, said slider being mounted slidably in the interior of said body (8a, 8a') between a retracted position in which it is in the interior of said body and a deployed position in which said head (10a, 10a') is in butting relationship with respect to said body (8a, 8a') and in which said stem (12a, 12a') points towards the exterior of said body and towards the interior of said cover (15a, 15a'),
in such a way that when said fluid is simultaneously at the same pressure in said actuators (7a, 7a', 7b, 7b', 7c, 7c', 7d, 7d'), it can exercise a thrust against said sliders (9a, 9a') and against said covers (15a, 15a') in order to move said members to a stable equilibrium position in which each slider is in said butting position with respect to said body (8a, 8a') and each cover is in butting relationship against the end of the stem (12a. 12a') of the corresponding slider, thus making it possible to place said fork (Fa, Fb, Fc, Fd) in a neutral position between said first and second positions.

3. A gear change apparatus for a robotic gearbox, **characterised in that** it comprises at least one assembly (Fa, Fb, Fc, Fd) according to one of claims 1 and 2, and a hydraulic control circuit adapted to selectively actuate one (7a, 7b, 7c, 7d) or other (7a', 7b', 7c', 7d') of the actuators or said two actuators at once.

4. Apparatus according to claim 3 **characterised in that** it comprises at least two assemblies (Fa, Fb, Fc, Fd), according to one of claims 1 and 2 and that said hydraulic circuit comprises means for actuating the actuators of one of said assemblies independently of the actuators of the other assembly.

5. Apparatus according to claim 4 **characterised in that** it comprises four assemblies (Fa, Fb, Fc, Fd) according to one of claims 1 and 2 and that said independent actuating means comprise an electrically operated three-position three-way valve (27) connected to eight electrically operated two-position three-way valves (29a, 29a', 29b, 29b', 29c, 29c', 29d, 29d') controlling said actuators (7a, 7a', 7b, 7b', 7c, 7c', 7d, 7d').

6. Apparatus according to claim 3 **characterised in that** it comprises at least two assemblies (Fa, Fb, Fc, Fd) according to one of claims 1 and 2 and that said hydraulic circuit comprises means for preventing simultaneous actuation of actuators forming part of different assemblies.

7. Apparatus according to claim 6 **characterised in that** it comprises four assemblies (Fa, Fb, Fc, Fd) according to one of claims 1 and 2 and that said actuating means comprise an electrically operated three-position three-way valve (27) connected to two electrically operated two-position three-way valves (33, 33') themselves connected to an electrically operated two-position eight-way valve (34) itself connected to an electrically operated two-position sixteen-way valve (35) controlling said actuators (7a, 7a', 7b, 7b', 7c, 7c', 7d, 7d').

8. Apparatus according to claim 6 **characterised in that** it comprises four assemblies (Fa, Fb, Fc, Fd) according to one of claims 1 and 2 and that said actuating means comprise two electrically operated three-position three-way valves (27, 27') connected to an electrically operated two-position eight-way valve (34) itself connected to an electrically operated two-position sixteen-way valve (35) controlling said actuators (7a, 7a', 7b, 7b', 7c, 7c', 7d, 7d').
